# EUROPEAN PATENT SPECIFICATION

(11) **EP 0 550 371 B1**
(45) Date of publication and mention of the grant of the patent: **27.01.1999**
(21) Application number: 92480182.2
(22) Date of filing: 30.11.1992
(51) Int. Cl.: G06F 3/16, G06F 3/033

(54) **System for associating audio components with positions on a data processing system display to produce audio outputs**
System zur Verknüpfung von Audiokomponenten mit Stellen auf einer Datenverarbeitungssystemanzeige zum Erzeugen von Audioausgängen
Système pour associer des composants audio à des positions d'un affichage d'un système de traitement de données pour produire des sorties audio

(30) Priority: 31.12.1991 US 815452
(43) Date of publication of application: 07.07.1993
(73) Proprietor: International Business Machines Corporation, Armonk, N.Y. 10504 (US)
(72) Inventor: Johnson, William J., Flower Mound, TX 75028 (US); Smith, Michael D., Euless, TX 76039 (US)
(74) Representative: de Pena, Alain

(56) References cited:
- EP-A- 0 414 566
- EP-A- 0 459 174
- 'The Computer Dictionary-Second Edition', MICROSOFT PRESS, ISBN 1-55615-597-2

## Description

The present invention relates to associating audio components with visual information in a data processing system, and more specifically to associating audio components to a display in a data processing system so as to produce audio outputs.

In a data processing system, user interfaces allow users to access the data processing system. A user interface typically includes a keyboard and a display. The display is a visual medium that provides information to the user. In addition, the user interface may include a speaker to provide audio outputs to the user. Audio components are used to produce the audio outputs on the speaker or some other audio output device and include tones, frequencies, prerecorded audio and textual strings for use in text-to-speech operations.

In the prior art see, for example, document EP-A-0 459 174, the audio and visual mediums have been integrated together by assigning audio components to objects presented on the display. For example, one way to display information visually is to use icons. An icon of a printer denotes the hardware printer device used by the data processing system. The prior art allows an audio component to be assigned to the printer icon on the display, so that when the printer icon is utilized in some manner, the audio component associated with the printer icon produces an audio output to the user through the speaker. In addition, the prior art provides the capability of creating audio tone changes as a cursor approaches a designated object.

The prior art is limited to assigning audio components to objects. As an object is moved to various positions on the display, any audio component that is associated with the object moves with the object. It is, however, desirable to assign audio components to positions on a display independently of any objects. Such an arrangement would facilitate organization of the display by allowing audio components to be associated with defined positions or locations on the display. The audio component for the defined position would be produced as an output to the audio output device whenever a triggering event occurred in the defined position.

In addition, such an arrangement would allow a user to configure a display to facilitate navigation of a cursor on the display. For example, a visually impaired user might configure a display so that as the cursor is moved to a new location on the display, the new location is identified by an audio output. This type of audio feedback would also be helpful to a visually impaired user of a computer aided design (CAD) system, where cursor movements are critical in defining geometric shapes.

EP-A-414 566 discloses a computer graphics drawing tablet in which an audio output is emanated whose volume and pitch changes with the coordinates of a curser on a screen.

It is an object of the present invention to provide a method and system for associating audio components with positions on a display of a data processing system to produce audio outputs.

Accordingly, the invention provides a data processing system including display means and means for providing audio outputs that are associated with positions on the display means, characterised by a configuration table including a list of associations between predetermined audio producing components, positions on the display screen and events, the events that are defined in the configuration table being used to trigger the production of audio outputs from the audio producing components associated with the display screen positions; and means to enable a user to update the configuration table using a configuration method.

The present invention provides audio outputs that are associated with positions on a display means in a data processing system. The present invention associates a predetermined audio component and a predetermined event to one of said positions on the display means. An audio output is produced from the audio component that is associated with the one position, after the event has occurred in the one position.

Fig. 1 is a block diagram of a data processing system on which the present invention can be practiced.

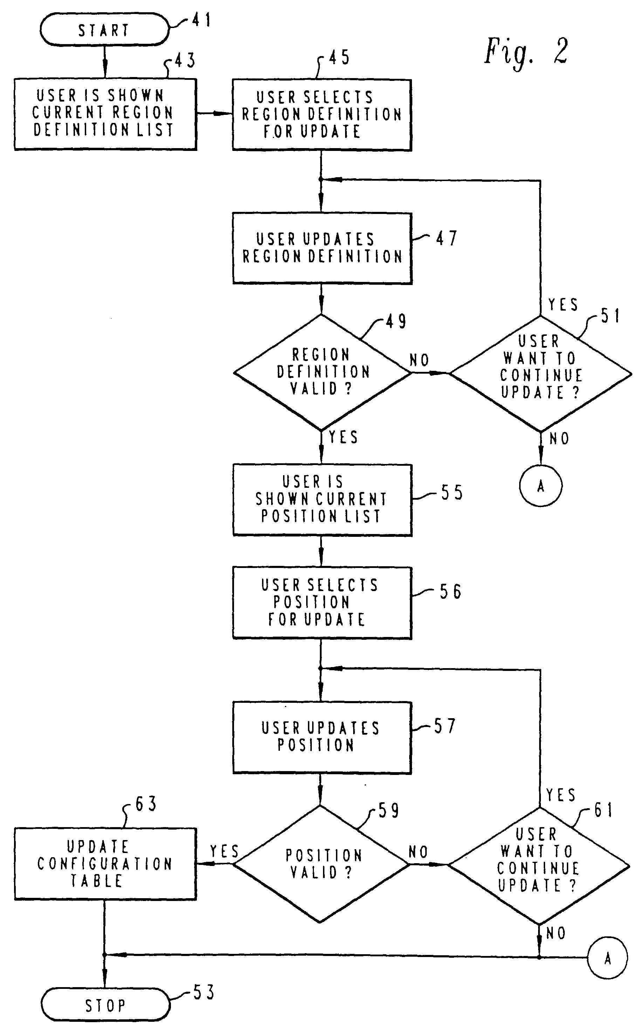

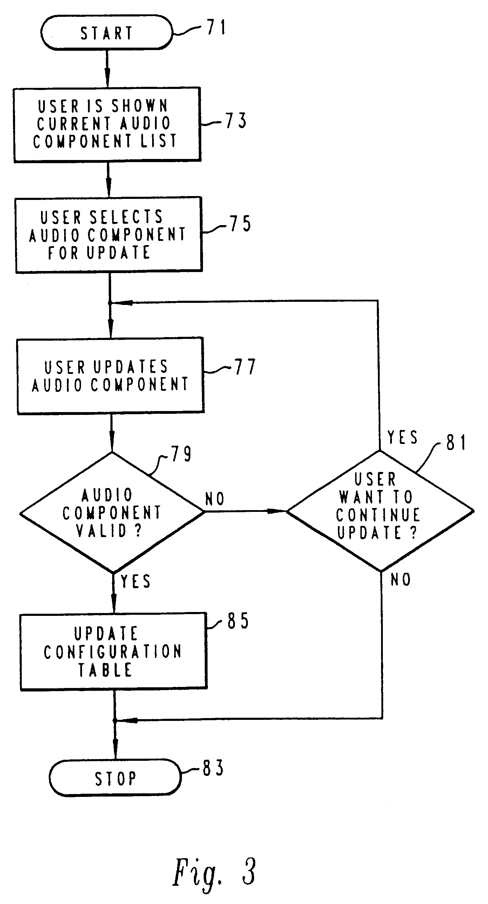

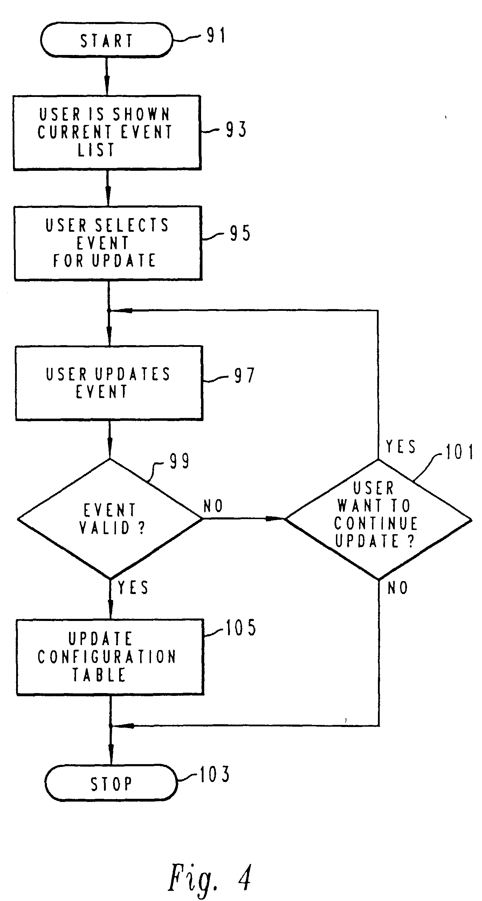

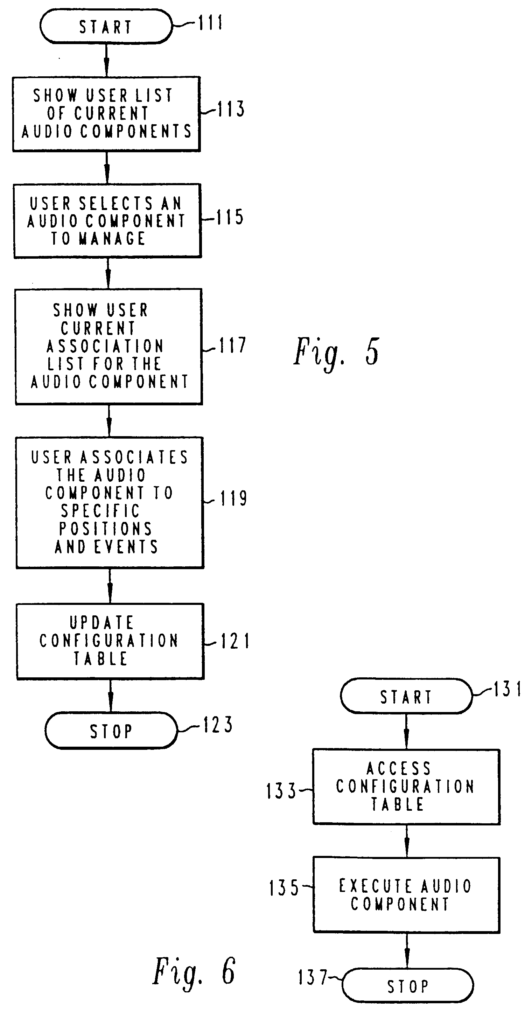

Figs. 2-6 are flow charts showing the method of the present invention, in accordance with a preferred embodiment. Fig. 2 shows the method for managing region definitions and defined positions. Fig. 3 shows the method for managing defined audio components. Fig. 4 shows the method for managing defined events. Fig. 5 shows the method for managing the associations between the defined audio components, the defined positions and the defined events. Fig. 6 shows the activation method for executing an audio component that is associated with a defined position when an associated defined event has occurred.

Figs. 7-10 are schematic views of a computer display screen, showing plural icons thereon for illustrating the operation of the present invention.

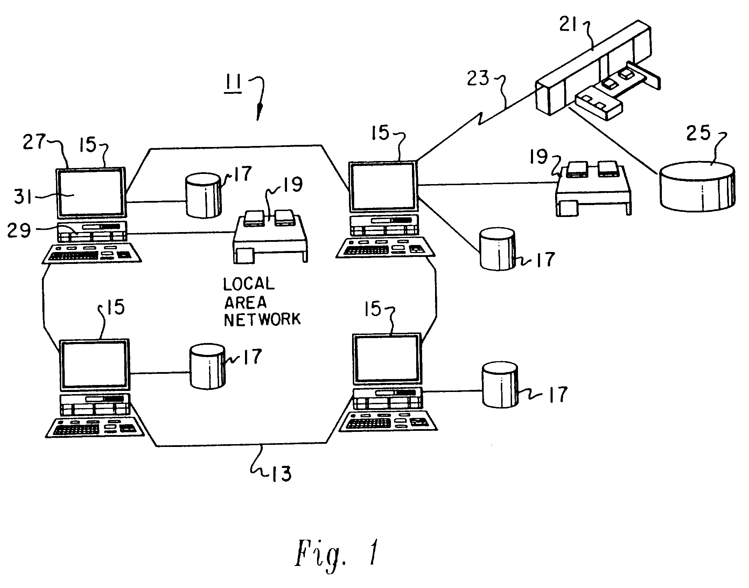

In Fig. 1, there is shown a block diagram of a data processing system 11, upon which the present invention can be practiced. As may be seen, the data processing system 11 may include a network, such as Local Area Network (LAN) 13 which preferably includes a plurality of individual user interfaces in the form of computers 15. Each computer 15 includes a display 27 and a speaker 29. The display 27 has a screen 31 for presenting visual information to a user. The speaker 29 presents audio outputs to the user. Of course, those skilled in the art will appreciate that a plurality of Interactive Work Stations (IWS) coupled to a host processor may be utilized for each such network.

As is common in such data processing systems, each individual computer 15 may be coupled to a storage device 17 and/or a printer/output device 19. One or more such storage devices 17 may be utilized, in accordance with the method of the present invention, to store applications or resource objects which may be periodically accessed by any user within the data processing system 11.

Still referring to Fig. 1, it may be seen that the data processing system 11 may also include a main frame computer 21, which may be preferably coupled to the computers 15 and their respective displays 27 by means of a communication link 23. The main frame computer 21 may also be coupled to a storage device 25 which may serve as remote storage for the computers 15 and displays 27.

The method of the present invention will now be described with reference to the flow charts of Figs. 2-6. In the flow charts, the following graphical conventions are observed: a diamond for a test or decision, a rectangle for a process or function and a circle for a connector in exiting to or entering from another part of the flow chart. These conventions are well understood by those skilled in the art, and the flow charts are sufficient to enable one skilled in the art to write code in any suitable computer programming language, such as BASIC, PASCAL or C for a computer such as the IBM Personal System/2 (PS/2) family of computers which supports these languages.

The method of the present invention includes the configuration methods shown in Figs. 2-5 and the activation method of Fig. 6. The configuration methods of Fig.2-5 update a configuration table that is used to store the necessary parameters for implementing the present invention. The configuration table has a list of region definitions, a list of positions, a list of audio components, a list of events and a list of associations between the audio components, the positions and the events. The configuration method of Fig. 2 updates, by adding or editing, the list of region definitions and the list of positions. The positions are located on the display screen 31, Fig. 1, and are defined according to a region definition or coordinate system. The configuration method of Fig. 3 updates the list of audio components. The audio components are used to produce the audio outputs on the speaker or some other audio output device and include tones, frequencies, prerecorded audio and textual strings for use in text-to-speech operations. The configuration method of Fig. 4 updates the list of events. The events that are defined on the list of events are used to trigger the production of audio outputs from the audio components associated with a position. The events can include asynchronous events, such as icon animation or color change, and synchronous events, such as moving a mouse cursor or icons. The configuration method of Fig. 5 updates the list of associations between the audio components, the positions and the events. The activation method of Fig. 6 produces the audio output from the audio component that is associated with a position on the display.

Referring now to Fig 2, the configuration method for managing the list of region definitions and the list of positions will be described. The method of Fig. 2 is invoked when the user selects to update the region definitions or the positions for a particular region definition. The method is first started and initialized, step 41. In step 43, the user is shown, on the computer display screen 31, Fig. 1, the current region definition list. The current region definitions are a list of available coordinate systems that are used to define positions on a display. The user selects a particular region definition for updating, step 45. Then, the user updates the selected region definition by adding or editing, step 47. The region definition list, as well as the other lists in the configuration table, could be null, as when the configuration table is initially configured. If the list is null (i.e. empty), then the user updates the list by adding to it. Once the update is made, the method checks to determine if the new region definition is valid, step 49. If the result of step 49 is NO, then the method proceeds to step 51 to determine if the user wants to continue the update by modifying the region definition. If the result of step 51 is NO, the method stops, step 53. If the result of step 51 is YES, then the method loops back to step 47. If the result of step 49 is YES, then the user is shown the current position list for the selected region definition, step 55. The user selects a position for update, step 56. Then, the user updates the selected position in the selected region definition, step 57. The method then checks if the updated position is valid, step 59. If NO, the position is not valid, the method proceeds to step 61 to determine if the user wants to continue the definition of positions, step 61. If the result of step 61 is NO, the method stops, step 53. If the result of step 61 is YES, the method loops back to step 57. If the result of step 59 is YES, the defined position is valid, then the configuration table is updated with the region definition and the position, step 63. Then, the method stops, step 53.

Referring now to Fig. 3, the configuration method for managing audio components will be described. The method of Fig. 3 is invoked when the user selects to update the audio component list of the configuration table. The method is first started and initialized, step 71. In step 73, the user is shown, on the computer display screen 31, the current audio component list from the configuration table. The user selects a particular audio component for updating, step 75. Then, the user updates the selected audio component by adding or editing, step 77. The method checks to determine if the audio component is valid, step 79. If the result of step 79 is NO, then the method proceeds to step 81 to determine if the user wants to continue the update by modifying the audio component. If the result of step 81 is NO, the method stops, step 83. If the result of step 81 is YES, then the method loops back to step 77. If the result of step 79 is YES, then the configuration table is updated with the audio component, step 85. Then, the method stops, step 83.

Referring now to Fig. 4, the configuration method for managing events will be described. The method of Fig. 4 is invoked when the user selects to update the event list of the configuration table. The method is first started and initialized, step 91. In step 93, the user is shown, on the computer display screen 31, the current event list from the configuration table. The user selects a particular event for updating, step 95. Then, the user updates the event by adding or editing, step 97. The method checks to determine if the event is valid, step 99. If the result of step 99 is NO, then the method proceeds to step 101 to determine if the user wants to continue the update by modifying the event. If the result of step 101 is NO, the method stops, step 103. If the result of step 101 is YES, then the method loops back to step 97. If the result of step 99 is YES, then the configuration table is updated with the event, step 105. Then, the method stops, step 103.

Referring to Fig. 5, the association manager method will be described. The association manager method is invoked when the user selects to update the list of associations between the audio components, the positions and the events in the configuration table. The method is started and initialized, step 111. The user is shown the list of current audio components from the configuration table, step 113. Then, the user selects an audio component to manage, step 115. The user is shown the current association list, from the configuration table, for the selected audio component. In step 119, the user links the audio component to specific positions and events, which positions and events were defined using the methods shown in Figs. 2 and 4. Then, in step 121, the list of associations is updated. The method then stops, step 123.

Referring now to Fig. 6, the activation method will be described. The activation method is invoked whenever an associated event occurs within a defined position. The -activation method is started and initialized, step 131. In step 133, the configuration table, with its lists of associations, audio components, positions and events, is accessed. Then, in step 135, the audio component that is associated with the event that has occurred in the defined position is executed. When the audio component is executed, the audio output is produced through the speaker. The method stops, step 137.

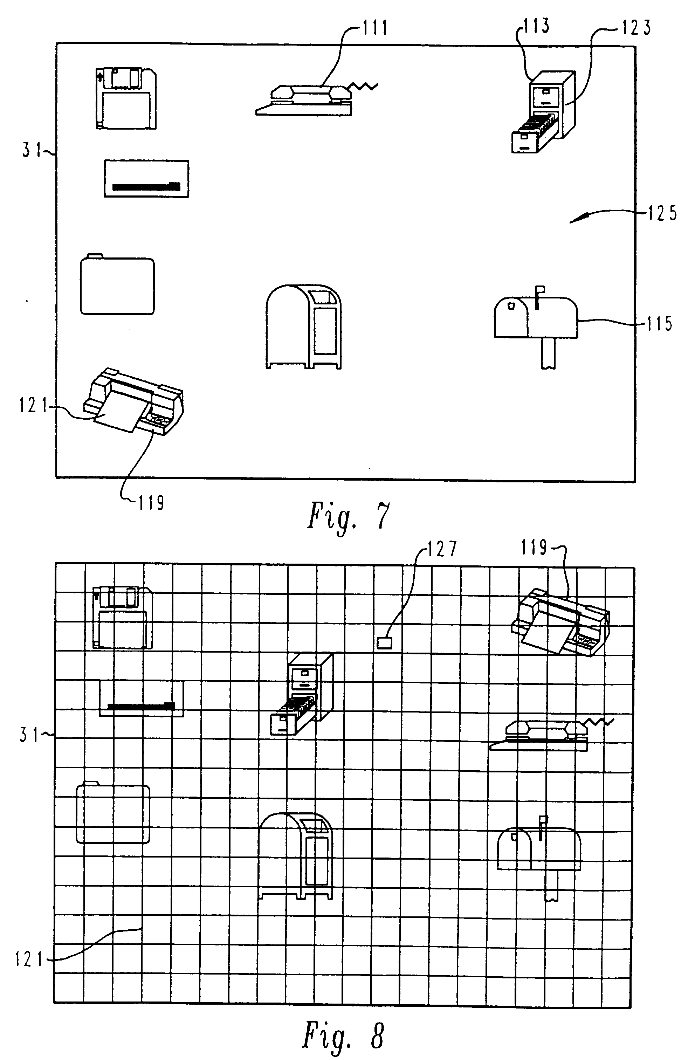

Referring now to Figs. 7-10 examples illustrating the operation of the present invention will be explained. Figs. 7-10 show schematic representations of the computer display screen 31. In the embodiment described herein, the display screen 31 is incorporated into a desktop computer 15 (see Fig. 1). However, the display screen 31 could be any screen on a user interface of a data processing system.

The display screen 31 is configured using the configuration methods of Figs. 2-5. To associate an audio component with a position on the display screen 31, the following parameters are specified or defined: the region definition or coordinate system; the position, as defined by the region definition, on the display screen; the audio component; the event that triggers the playing of that audio component; and the association between the audio component, the position and the event.

Referring specifically to Fig. 7, there are shown various icons, including a phone icon 111, a file cabinet icon 113, an incoming mail icon 115, an outgoing mail icon 117 and a printer icon 119.

The display screen 31 is configured as follows. A first audio component is defined as "JOB COMPLETED" and is associated with a first position 121. The first position 121 is defined using a rectangular grid coordinate system of 15 rows by 20 columns, (such a coordinate system is shown in Fig. 8). The first position 121 is located at squares 13 (row), 3 (column) and 13 (row), 4 (column). The event for triggering the first audio component of the first position 121 is defined as when objects located on the first position produce an audio output. As shown in Fig. 7, the printer 119 is located on the first position 121. When a print job is completed, the printer icon 119 will produce an audible signal. This event invokes the activation method of Fig. 6 which produces the audio output "JOB COMPLETED" through the speaker.

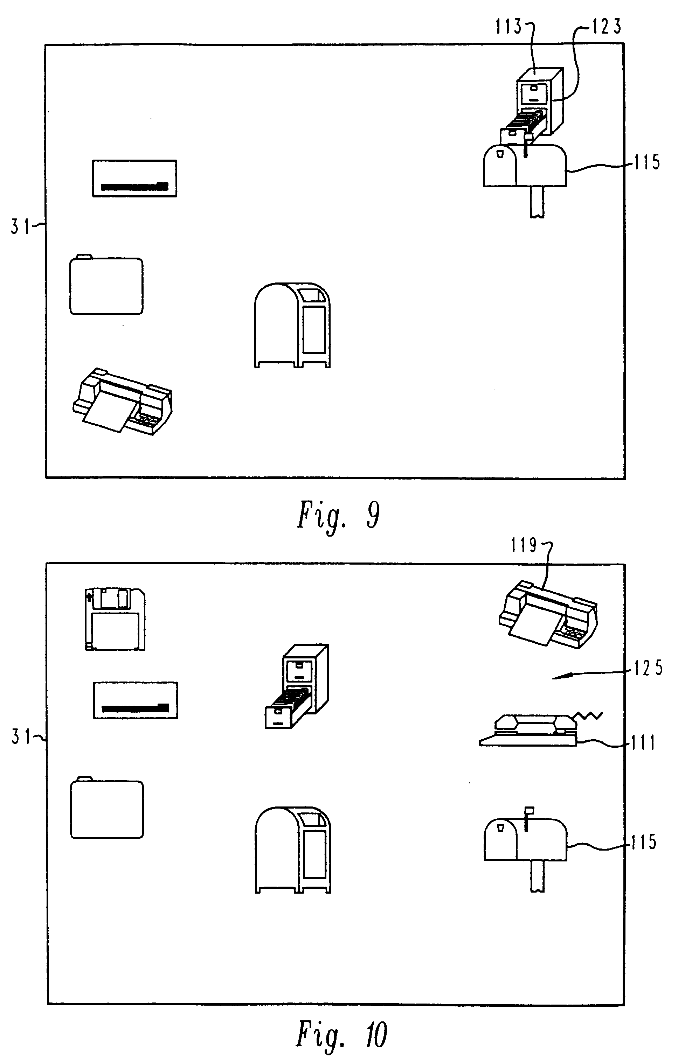

A second audio component is defined as "THIS LOCATION OCCUPIED" and is associated with a second position 123 (see Fig. 7). The second position 123 is also defined using a rectangular grid coordinate system, but with smaller squares. Specifically a grid of 30 rows by 80 columns (not shown) is used. The second position 123 is located at square 4 (row), 75 (column). The event for triggering the second audio component of the second position 123 is defined as when objects located in the second position come in contact with one or more objects dragged there. When, as shown in Fig. 9, the incoming mail icon 115 is dragged to the file cabinet icon 123, the two objects come in contact with each other. This event triggers the production of the audio output "THIS LOCATION OCCUPIED" by invoking the activation method of Fig. 6.

A third audio component is defined as "YOU HAVE WORK TO DO" and is associated with a third position 125. The third position 125, Fig. 10, is defined using fractional specifications, namely leftmost, center and rightmost thirds of the display screen 31. The third position 125 is the entire rightmost third of the display screen. The event for triggering the third audio component of the third position 125 is defined as when objects located in the third position change color (due to, for example, an asynchronous event), animate or are selected. Events that trigger production of the audio output "YOU HAVE WORK TO DO" include asynchronous notification of the incoming mail icon 115, movement of the incoming mail icon 115, color change of the incoming mail icon 115, flickering of the printer icon 119 as a result of a completed job and asynchronous notification of a telephone call, movement or color change of the telephone icon 111.

A fourth, variable position is defined using a rectangular grid coordinate system of 15 rows by 20 columns, as shown in Fig. 8. An audio component is assigned to every square and is defined as "ROW J, COLUMN K", with J being the row number and K being the column number. The event for triggering the audio component is defined as whenever the mouse cursor 127 is dragged over a square. Thus, when the mouse cursor 127 is moved horizontally toward the printer icon 119 in Fig. 8, the following audio output will be produced, "ROW 3, COLUMN 12", "ROW 3, COLUMN 13", "ROW 3, COLUMN 14" and so on.

Although the present invention has been described in conjunction with a computer display screen 31, other types of visual media devices could be used. For example, radar screens could be used with the present invention. In addition, multidimensional visual media devices could be used.

The region definition for defining a position with an associated audio component can be a rectangular coordinate system, a polar coordinate system, curved lines or fractional specifications. Furthermore, mathematical functions can be used to define the region definition.

The audio component can be provided using text-to-speech processes on textual strings or prerecorded audio. If textual strings are used, conversion to audio can occur when the display screen is configured, or if the data processing system operates at a sufficiently high speed, then conversion can occur in step 135 of Fig. 6.

## Claims

1. A data processing system (11) including display means (27) and means (29) for providing audio outputs that are associated with positions on the display means (27),
characterised by
a configuration table including a list of associations between predetermined audio producing components, positions on the display screen and events, the events that are defined in the configuration table being used to trigger the production of audio outputs from the audio producing components associated with the display screen positions; and
means to enable a user to update the configuration table using a configuration method.

2. A data processing system as claimed in claim 1, further comprising:
a) means for defining said event as a cursor moving between two or more of said positions on said display means; and
b) means for associating said audio component with each of said two or more positions so that as said cursor is moved between said two or more positions the navigation of said cursor on said display means is facilitated.

3. A data processing system as claimed in claim 1 or claim 2 further comprising means for defining said display screen positions in accordance with a defined coordinate system.

4. A data processing system as claimed in any preceding claim further comprising means for defining a region definition for the purpose of identifying said display screen positions on said display means.

5. A data processing system as claimed in any preceding claim wherein event is an asynchronous event associated with said display screen positions.

6. A data processing system as claimed in any preceding claim wherein said event is a synchronous event associated with said display screen positions.

7. A data processing system as claimed in any preceding claim wherein said audio component comprises textual strings for use in text-to-speech processes.

## Patentansprüche

1. Datenverarbeitungssystem (11), das ein Anzeigemittel (27) und ein Mittel (29) zur Bereitstellung von Tonfrequenzausgaben enthält, die Positionen auf dem Anzeigemittel (27) zugeordnet sind,
gekennzeichnet durch
eine Konfigurationstabelle, die eine Liste der Zuordnungen zwischen vorher festgelegten tonfrequenzerzeugenden Komponenten, Positionen auf dem Bildschirm und Ereignissen enthält, wobei die in der Konfigurationstabelle angegebenen Ereignisse dazu verwendet werden, die Erzeugung von Tonfrequenzausgaben von den tonfrequenzerzeugenden Komponenten, die den Bildschirmpositionen zugeordnet sind, auszulösen; und
ein Mittel, um einem Benutzer die Aktualisierung der Konfigurationstabelle mit Hilfe eines Konfigurationsverfahrens zu ermöglichen.

2. Datenverarbeitungssystem nach Anspruch 1, das des weiteren folgendes umfaßt:
a) ein Mittel, um das Ereignis als einen Cursor anzugeben, der sich zwischen zwei oder mehr der Positionen auf dem Anzeigemittel bewegt; und
b) ein Mittel, um die tonfrequenzerzeugende Komponente jeder der beiden oder mehr Positionen zuzuordnen, so daß die Navigation des Cursors auf dem Anzeigemittel vereinfacht wird, während der Cursor zwischen den beiden oder mehr Positionen bewegt wird.

3. Datenverarbeitungssystem nach Anspruch 1 oder Anspruch 2, das des weiteren ein Mittel umfaßt, um die Bildschirmpositionen entsprechend einem angegebenen Koordinatensystem anzugeben.

4. Datenverarbeitungssystem nach jedem der vorhergehenden Ansprüche, das des weiteren ein Mittel zur Angabe einer Bereichsdefinition umfaßt, um die Bildschirmpositionen auf dem Anzeigemittel zu kennzeichnen.

5. Datenverarbeitungssystem nach jedem der vorhergehenden Ansprüche, wobei das Ereignis ein den Bildschirmpositionen zugeordnetes, asynchrones Ereignis ist.

6. Datenverarbeitungssystem nach jedem der vorhergehenden Ansprüche, wobei das Ereignis ein den Bildschirmpositionen zugeordnetes, synchrones Ereignis ist.

7. Datenverarbeitungssystem nach jedem der vorhergehenden Ansprüche, wobei die tonfrequenzerzeugende Komponente Textfolgen zur Verwendung bei Text-in-Sprache-Umwandlungsprozessen umfaßt.

## Revendications

1. Un système de traitement de données (11) comprenant des moyens d'affichage (27) et des moyens (29) destinés à fournir des sorties audio associées à des positions sur les moyens d'affichage (27),
caractérisé par
une table de configuration comprenant une liste d'associations entre des composants de production audio prédéterminés, des positions sur l'écran d'affichage et des événements, les événements qui sont définis dans la table de configuration étant utilisés pour déclencher la production de sorties audio par les composants de production audio associés aux positions sur l'écran d'affichage; et
des moyens pour permettre à un utilisateur de mettre à jour la table de configuration par utilisation d'un procédé de configuration.

2. Un système de traitement de données selon la revendication 1 comprenant en outre :
a) des moyens pour définir ledit événement lorsqu'un curseur se déplace entre deux desdites positions ou plus sur lesdits moyens d'affichage; et
b) des moyens pour effectuer une association entre ledit composant audio et chacune desdites deux positions ou plus, de manière que, lorsque ledit curseur se déplace entre lesdites deux positions ou plus, la navigation dudit curseur sur lesdits moyens d'affichage soit facilitée.

3. Un système de traitement de données selon la revendication 1 ou la revendication 2, comprenant en outre des moyens pour définir les positions sur l'écran d'affichage, selon un système de coordonnées défini.

4. Un système de traitement de données selon l'une quelconque des revendications précédentes, comprenant en outre des moyens destinés à définir une définition de région, dans le but d'identifier lesdites positions sur l'écran d'affichage sur lesdits moyens d'affichage.

5. Un système de traitement de données selon l'une quelconque des revendications précédentes, dans lequel l'événement est un événement asynchrone, associé auxdites positions sur l'écran d'affichage.

6. Un système de traitement de données selon l'une quelconque des revendications précédentes, dans lequel ledit événement est un événement synchrone, associé auxdites positions sur l'écran d'affichage.

7. Un système de traitement de données selon l'une quelconque des revendications précédentes, dans lequel ledit composant audio comprend des chaînes textuelles destinées à être utilisées dans des processus texte vers parole.
